# EUROPEAN PATENT SPECIFICATION

(11) **EP 1 798 068 B1**
(45) Date of publication and mention of the grant of the patent: **23.09.2009**
(21) Application number: 06125988.3
(22) Date of filing: 13.12.2006
(51) Int. Cl.: B60C 11/16

(54) **Stud pin for stud in studded tyre**
Spikestift für Spikes in Spike-Reifen
Tête de clou dans un pneu clouté

(30) Priority: 16.12.2005 FI 20055678
(43) Date of publication of application: 20.06.2007
(73) Proprietor: Scason OY, 20380 Turku (FI)
(72) Inventor: Hagelin, Pentti, 20780 Kaarina (FI)
(74) Representative: Valkeiskangas, Tapio Lassi Paavali

(56) References cited:
- WO-A-99/56976
- WO-A-02/070287
- FR-A- 2 182 750
- RU-C1- 2 280 564
- US-A1- 2004 163 746

## Description

The invention relates to a stud pin for a stud in a studded tyre, the stud pin being intended to be fastened to a body of the stud, whereby the stud pin comprises a first end intended to protrude from the body of the stud and a second end intended to be arranged inside the body of the stud, whereby the stud pin is of substantially triangular shape in cross section and the cross section of the stud pin is substantially triangular in the area extending from the first end of the stud pin towards the second end. As an example of the stud pins described above the document WO-A-99/56776 can be mentioned.

Several types of studs for studded tyres have been developed over the last decades. Very different aims and special conditions have been set for the studs at different times. In the beginning the only object was to achieve a grip that was as good as possible. What became a problem was mainly how to keep the stud in the tyre, but also the wear resistance. No restrictions were set for the protrusion and the piercing force of the stud. With time, the property of the studs wearing out the roads emerged and restrictions were set for the stud protrusions and the piercing force of the studs in the tyres used in general traffic that had an effect on the structure of the studs.

Examples of solutions developed during the decades are described for instance in FI patent publication 82815 and FI patent applications 864821 and 20021966.

Owing to the different special conditions and restrictions created with time, the design of the stud and the parts thereof has proven to be a more and more difficult task, since the stud is to be a compromise, in which the idea is to achieve a good grip in different driving conditions and on different road surfaces. In addition, presently the studs may not wear roads excessively, in other words the protrusion and the piercing force of the stud should remain within permissible limits, and they may not substantially change while in use. The stud should not wear too fast either, and the stud is to remain appropriately fastened and be placed in a correct position in the tyre. Furthermore, the stud should be advantageous to manufacture technically, since the manufacturing costs are to remain at a realistic level.

As a whole the stud in the studded tyre is presently a compromise, in which different regulations and standards set by the authorities must be taken into account. In addition, the object is to provide good grip properties, which also with wear remain impeccable, and appropriate wear resistance as well as realistic manufacturing costs. Consequently several factors have to be taken into account, which in practice is very difficult.

The solutions according to the prior art have not been able to provide the best possible end result. This has become apparent as various new solutions are constantly being developed by different manufacturers regardless of the fact that development work has been intensively carried out since the 1960's.

What is rapidly observed when examining the stud in the studded tyre is that it comprises two main parts, a body of the stud and a stud pin made of hard metal fastened to the body. Taking into account the currently valid regulations it has been observed that two factors are of importance when considering the whole, i.e. the size of the contact area of the stud pin and the consumption of raw material used for manufacturing the stud pin. The size of the contact area is associated with the size of the grip area of the stud pin and the consumption of raw material used for manufacturing the stud pin is in turn associated directly with the manufacturing costs, since the raw material used for manufacturing the stud pin is expensive and forms a significant expense in connection with the manufacturing of studs.

Conventionally the shape of the stud pin of the stud intended to be used in general traffic has been circular in cross section. However, in recent years stud pins that are square or oval-shaped in cross section have also been introduced. However, a problem with the stud pins shaped in such a new manner is that mounting the stud pin in the body has become a difficult stage, since such stud pins must be mounted in the body in a particular position, in which case considerable sums are easily invested for special tools required in mounting, whereby the manufacturing costs easily increase significantly.

It is an object of the invention to provide a stud pin for a stud in a studded tyre that allows eliminating the drawbacks of the prior art. This is achieved with a stud pin according to the invention. A stud pin for a stud in a studded tyre according to the invention is characterized in that the cross sectional shape of the stud pin is arranged to change in the longitudinal direction of the stud pin seen from the end to the second end from a substantially triangular shape to a substantially circular shape.

An advantage of the invention is above all that the invention allows fulfilling all the criteria presently set for studs in an advantageous manner, meaning that the stud according to the invention allows achieving good grip and resistance properties in different situations and on different driving surfaces and the restrictions set by the authorities will not cause any problems. As regards manufacturing, the invention provides such an advantage in comparison with the prior art that the stud pin being of a triangular shape in cross section can be mounted in the body of the stud in any position, thus accelerating the manufacture compared with the prior art. Another advantage is provided when studding the tyre, as the stud is always correctly positioned in the tyre, meaning that the stud pin of triangular shape is automatically in such a position that irrespective of the direction of movement always offers the best possible grip, no matter if acceleration grip, braking grip or lateral grip is concerned. A result of the stud being automatically set in the correct position is that while employing the invention the studding does not require expensive special tools and therefore no large investments on equipment. A further advantage of the invention is that the invention may preferably be applied in different types of stud bodies. Thus, the invention can preferably be applied to studs used with very different types of tyres.

In the following the invention will be described in greater detail by means of the embodiment shown in the accompanying drawing, where
Figure 1 schematically shows a top view of a stud pin according to the invention,
Figure 2 schematically shows a side view of the stud pin shown in Figure 1,
Figure 3 schematically shows a top view of a stud, in which the stud pin shown in Figures 1 to 2 is used,
Figure 4 schematically shows a side view of the stud shown in Figure 3,
Figure 5 schematically shows a bottom view of the stud shown in Figures 3 and 4, and
Figure 6 schematically shows a perspective view of the stud shown in Figures 3 to 5.

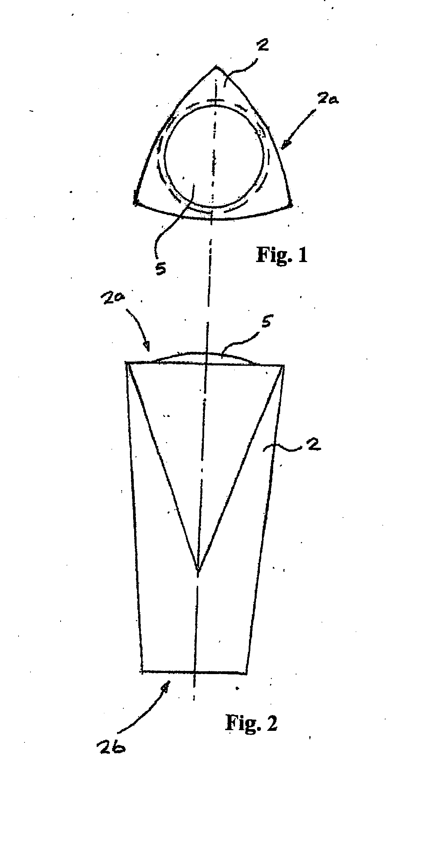

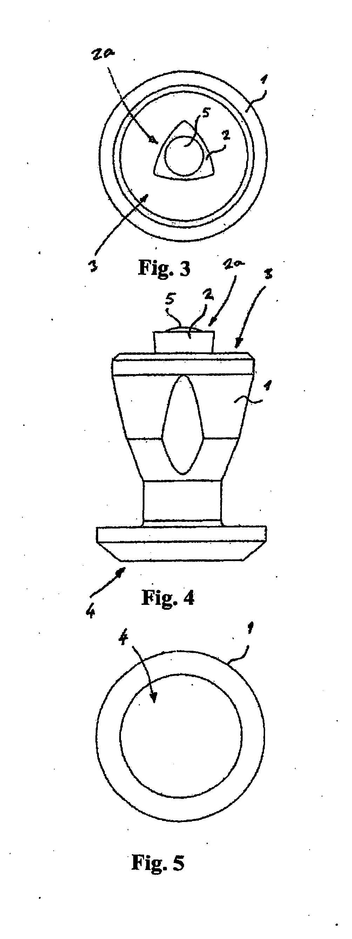

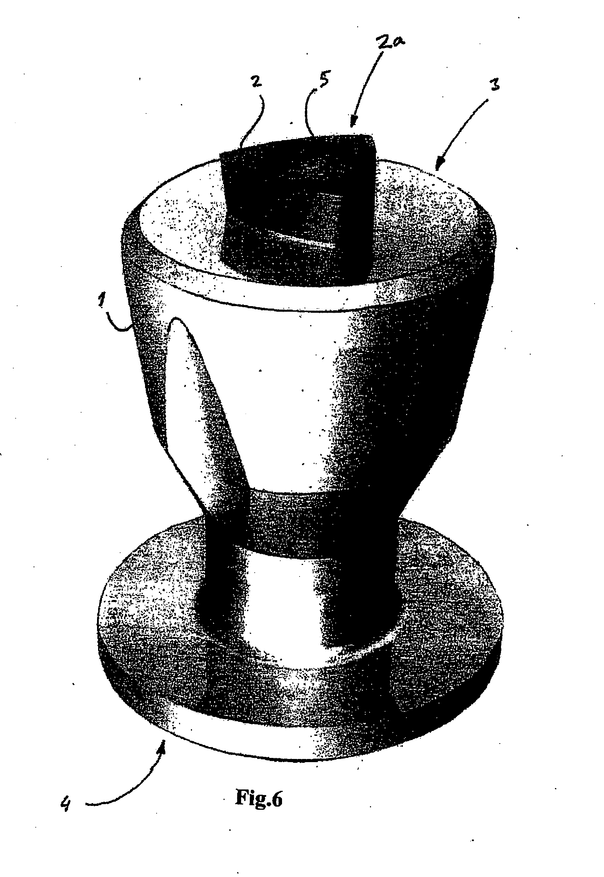

Figures 1 to 2 show an embodiment of a stud pin according to the invention. Figures 3 to 6 in turn show an embodiment of a stud in a studded tyre, where the stud pin shown in Figures 1 and 2 is used. In order to emphasize the significance of a stud pin, the stud pin will be described in the following first with reference to the stud shown in Figures 3 to 6.

Figures 3 to 6 show an embodiment of the stud in a studded tyre, where the stud pin according to the invention is used. The stud comprises a body 1 and a stud pin 2 arranged therein. The body 1 comprises an upper surface 3, which when mounting the stud in a stud hole of the studded tyre is intended to be placed in the area of the wear surface of the tyre or in the vicinity thereof. The body also comprises a lower surface 4, which when mounting the stud in the stud hole of the studded tyre is intended to be placed in the vicinity of the bottom of the stud hole. The stud pin comprises a first end 2a and a second end 2b, whereby the first end 2a is intended to protrude from the body and the second end 2b is intended to be arranged inside the body. The upper surface, i.e. the surface that is pressed against the road surface, of the first end 2a of the stud pin in the stud is substantially planar as shown in the Figures.

The first end 2a of the stud pin 2 is shown in Figures 3, 4 and 6 and the second end 2b is in turn shown in Figures 1 and 2, to which reference is made below.

The facts described above form part of a completely conventional technology to those skilled in the art, and such facts are therefore not explained in more detail in this context.

According to an essential idea of the invention the stud pin 2 is substantially of a triangular shape in cross section and the cross section of the stud pin is substantially triangular in the area extending from the first end 2a of the stud pin 2 to the second end 2b. The above mentioned facts are clearly visible in Figures 1 and 2 that describe an embodiment of the stud pin according to the invention.

The idea of the substantially triangular shape of the stud pin according to the invention is that the contact surface is made larger than when using the conventional circular shape. In addition, the stud pin having a substantially triangular shape in cross-section allows consuming less material than when using the conventional circular stud pin. What should also be noted is the advantages created when studding the tyre in comparison with the prior art, as shown above.

What is also characteristic to the invention is that the cross section of the stud pin 2 is arranged to change in the longitudinal direction of the stud pin, seen from the first end 2a to the second end 2b, from a substantially triangular shape to a substantially circular shape. This detail is clearly visible in Figures 1 and 2. The substantially triangular shape of the stud pin 2 is arranged to be so long that it extends inside the body 1 of the stud. The above fact is shown for instance by comparing Figures 2 and 4 with one another.

The stud pin 2 according to the invention is also preferably arranged to taper, when viewed from the first end 2a to the second end 2b. On account of such a property the surfaces providing the substantially triangular shape in cross section of the stud pin 2 mounted in the body 1 of the stud are arranged at an oblique angle in relation to the upper surface 3 of the body. This feature is clearly visible in Figure 4, i.e. the surfaces protruding from the upper surface 3 of the body 1 of the stud pin 2 form a widening structure, when viewed from the upper surface to the first end 2a of the stud pin 2.

In the embodiments shown in the Figures the side surfaces providing the substantially triangular shape in cross section of the stud pin 2 are formed as substantially arched surfaces. The arched surfaces may preferably be convex surfaces as shown in the Figures. What may preferably be arranged on the upper surface of the first end 2a of the stud pin 2 is a surface 5 resembling a segment of a sphere.

The embodiment of the invention shown above is not intended to restrict the invention in any way, instead the invention may be modified freely within the scope of the claims. It is therefore apparent that the stud pin according to the invention or the details thereof need not necessarily be exactly similar to those shown in the Figures, but other types of solutions are also possible. The invention is not for instance in anyway restricted to the stud body shown in the Figures, but the stud pin according to the invention can be fastened to a different type of body etc. The invention is not either limited in any way to any particular manufacturing material, but the invention may be used with all the materials that are used for manufacturing stud pins.

## Claims

1. A stud pin for a stud in a studded tyre, the stud pin (2) being intended to be fastened to a body (1) of the stud, whereby the stud pin (2) comprises a first end (2a) intended to protrude from the body of the stud and a second end (2b) intended to be arranged inside the body of the stud, and whereby the stud pin (2) is of a substantially triangular shape in cross section and the cross section of the stud pin is substantially triangular in the area extending from the first end (2a) of the stud pin towards the second end (2b),
**characterized in that** the cross sectional shape of the stud pin (2) is arranged to change in the longitudinal direction of the stud pin, seen from the first end (2a) to the second end (2b), from a substantially triangular shape to a substantially circular shape.

2. A stud as claimed in claim 1, **characterized in that** the stud pin (2) is arranged to taper when viewed from the first end (2a) to the second end (2b).

3. A stud as claimed in claim 1, **characterized in that** side surfaces providing the substantially triangular shape in cross section are formed as substantially arched surfaces.

4. A stud as claimed in claim 4, **characterized in that** the arched surfaces are convex surfaces.

5. A stud as claimed in claim 1, **characterized in that** a surface (5) resembling substantially a segment of a sphere is arranged on the upper surface of the first end (2a) of the stud pin (2).

## Patentansprüche

1. Spikestift für einen Spike in einem Spike-Reifen, welcher Spikestift (2) an einem Körper (1) des Spikes festzulegen ist, wobei der Spikestift (2) ein erstes Ende (2a), das von dem Körper des Spikes abzuragen hat, sowie ein zweites Ende (2b) aufweist, das innerhalb des Körpers des Spikes anzuordnen ist, und wobei der Spikestift (2) eine im Querschnitt im Wesentlichen dreieckige Form hat und der Querschnitt des Spikestifts im Wesentlichen in dem Bereich dreiecksförmig ist, der sich von dem ersten Ende (2a) des Spikestifts in Richtung zum zweiten Ende (2b) erstreckt,
**dadurch gekennzeichnet, dass** sich gesehen von dem ersten Ende (2a) zu dem zweiten Ende (2b) die Querschnittsform des Spikestifts (2) in der Längsrichtung des Spikestiftes ändert, und zwar aus einer im Wesentlichen dreieckigen Form in eine im Wesentlichen Kreisform.

2. Spike nach Anspruch 1,
**dadurch gekennzeichnet, dass** sich der Spikestift (2) aus Sicht von dem ersten Ende (2a) zu dem zweiten Ende (2b) verjüngt.

3. Spike nach Anspruch 1
**dadurch gekennzeichnet, dass** Seitenflächen, die im Wesentlichen die dreieckige Form im Querschnitt bilden, als im Wesentlichen gekrümmte Flächen ausgebildet sind.

4. Spike nach Anspruch 3,
**dadurch gekennzeichnet, dass** die gekrümmten Flächen konvexe Flächen sind.

5. Spike nach Anspruch 1,
**dadurch gekennzeichnet, dass** eine Fläche (5), die im Wesentlichen einem sphärischen Segment gleicht, auf der oberen Fläche des ersten Endes (2a) des Spikestiftes (2) angeordnet ist.

## Revendications

1. Tête de clou pour un clou dans un pneu clouté, la tête de clou (2) étant destinée à être fixée à un corps (1) du clou, la tête de clou (2) comprenant une première extrémité (2a) destinée à faire saillie du corps du clou et une deuxième extrémité (2b) destinée à être agencée à l'intérieur du corps du clou, et la tête de clou (2) présentant une section de forme substantiellement triangulaire et la section de la tête de clou étant substantiellement triangulaire dans une zone s'étendant de la première extrémité (2a) de la tête de clou en direction de la deuxième extrémité (2b), **caractérisée en ce que** la forme de la section transversale de la tête de clou (2) est conformée de manière à varier dans la direction longitudinale de la tête de clou, vue dans une direction allant de la première extrémité (2a) à la deuxième extrémité (2b), depuis une forme substantiellement triangulaire vers une forme substantiellement circulaire.

2. Clou selon la revendication 1, **caractérisé en ce que** la tête de clou (2) est conformée de manière telle qu'elle va en s'effilant lorsqu'elle est vue dans une direction allant de la première extrémité (2a) à la deuxième extrémité (2b).

3. Clou selon la revendication 1, **caractérisé en ce que** des surfaces de côté qui donnent la forme substantiellement triangulaire en section transversale sont en forme de surfaces substantiellement arquées.

4. Clou selon la revendication 4, **caractérisé en ce que** les surfaces arquées sont des surfaces convexes.

5. Clou selon la revendication 1, **caractérisé en ce qu'**une surface (5) ressemblant substantiellement à une calotte sphérique est agencée sur la surface supérieure de la première extrémité (2a) de la tête de clou (2).
